# EUROPÄISCHE PATENTSCHRIFT

(11) **EP 0 990 549 B1**
(45) Veröffentlichungstag und Bekanntmachung des Hinweises auf die Patenterteilung: **07.05.2008**
(21) Anmeldenummer: 99118328.6
(22) Anmeldetag: 15.09.1999
(51) Int. Cl.: B60L 5/38

(54) **Stromabnehmer**
Current collector
Dispositif de prise de courant

(30) Priorität: 02.10.1998 DE 19845416
(43) Veröffentlichungstag der Anmeldung: 05.04.2000
(73) Patentinhaber: Ferraz Shawmut, 69100 Villeurbanne (FR)
(72) Erfinder: van Riesen, Klaus, 22869 Schenefeld (DE)
(74) Vertreter: Myon, Gérard Jean-Pierre

(56) Entgegenhaltungen:
- DE-U- 8 808 492
- FR-A- 2 570 335
- GB-A- 1 028 575

## Beschreibung

Die Erfindung bezieht sich auf einen Stromabnehmer für Fahrzeuge, vorzugsweise für Schienenfahrzeuge, mit einer Schwinge, die zumindest indirekt beweglich an dem Fahrzeug gelagert ist und ein Kontaktelement zum Stromabgriff an einer Stromleitung aufweist, wobei die Schwinge von einer ersten Stellung, in welcher das Kontaktelement von der Stromleitung beabstandet ist, in eine zweite Stellung überführbar ist, in der das Kontaktelement an der Stromleitung anliegt, einer Kolben-Zylinder-Einrichtung zum Überführen der Schwinge von ihrer ersten in die zweite Stellung, und zwei Zugfedern, die mit der Kolben-Zylinder-Einrichtung wirkverbunden sind und in der zweiten Stellung der Schwinge das Kontaktelement nachgiebig gegen die Stromleitung vorspannen.

Ein derartiger Stromabnehmer ist beispielsweise aus der DE 44 30 492 bekannt. Dieser Stromabnehmer wird für Schienenfahrzeuge verwendet, bei denen der Stromabgriff an einer sogenannten dritten Schiene erfolgen soll, die die Stromleitung bildet. In ihrer ersten Stellung ist die Schwinge nach unten abgesenkt und wird zum Überführen in ihre zweite Stellung angehoben, so daß das Kontaktelement an der Stromleitung zur Anlage kommt. Das Überführen der Schwinge von in ihrer ersten in ihre zweite Stellung erfolgt durch eine Kolben-Zylinder-Einrichtung. Diese Kolben-Zylinder-Einrichtung weist einen Pneumatikzylinder auf, dessen Kolbenstange in bekannter Weise in zwei Stellungen verfahrbar ist. Im ausgefahrenen Zustand der Kolbenstange befindet sich die Schwinge in der zweiten Stellung. Im eingefahrenen Zustand der Kolbenstange ist die Schwinge abgesenkt, so daß das Kontaktelement und die Schiene außer Eingriff gelangen. Die Zugfedern sind beidseitig neben dem Zylinder angeordnet und über eine Quertraverse mit der Kolbenstange verbunden. Die Krafteinleitung der Kolbenstange folgt über die Zugfedern auf die Schwinge. In der zweiten Stellung der Schwinge befindet sich die Kolbenstange im ausgefahrenen Zustand, wobei die beiden Zugfedern vorgespannt werden. Dadurch ist das Kontaktelement nachgiebig gegen die Stromleitung in Anlage gebracht und kann während der Fahrt des Fahrzeuges geringfügig auf- und abschwingen um Unebenheiten der Stromleitung bzw. im Verlauf der Stromleitung auszugleichen.

Als problematisch erweist es sich bei dieser Konstruktion, daß es zu Verspannungen in der Kolben-Zylinder-Einrichtung aufgrund der beiden beidseitig des Zylinders angeordneten Federn kommen kann. Dadurch wird die Betriebssicherheit des Stromabnehmers herabgesetzt. Aufgrund der Vielzahl von erforderlichen Bauteilen, wie z.B. Traversen erweist sich diese Konstruktion als teuer in der Herstellung.

Weitere Stromabnehmer sind aus den Dokumenten DE 88 08 492 U, GB 1 028 575 und FR 2 570 335 bekannt.

Aufgabe der Erfindung ist es daher, einen Stromabnehmer der eingangs genannten Art derart weiterzuentwickeln, daß einerseits die Betriebssicherheit erhöht, und andererseits die Kosten zur Herstellung des Stromabnehmers herabgesetzt werden.

Die Aufgabe wird erfindungsgemäß durch einen Stromabnehmer nach Anspruch 1 dadurch gelöst, daß sich in der zweiten Stellung der Schwinge die Kolben-Zylinder-Einrichtung in einem zusammengefahrenen Zustand befindet, und daß die beiden Zugfedern ineinandergesetzt sind, wobei ihre Symmetrieachsen mit einer Symmetrieachse einer Kolbenstange der Kolben-Zylinder-Einrichtung fluchten.

Diese Lösung ist einfach und hat einen Vorteil, daß im Gegensatz zu bekannten Stromabnehmern der Kraftangriff durch die beiden Federn in der Symmetrieachse der Kolbenstange erfolgt. Dadurch werden Verspannungen der Kolben-Zylinder-Einrichtung wirksam verhindert. Auch ist keine Quertraverse mehr erforderlich, die die beiden Federn mit der Kolbenstange verbindet. Dadurch reduziert sich die Anzahl der erforderlichen Bauteile, so daß die Kosten zur Herstellung des Stromabnehmers herabgesetzt werden können. Zudem baut der erfindungsgemäße Stromabnehmer wesentlich schmäler als die bisher bekannten, so daß er sich einfacher in die Konstruktion eines bestehenden Fahrzeuges integrieren läßt.

In einer vorteilhaften Weiterbildung der Erfindung kann die Kolbenstange durch die beiden einander gegenüberliegenden Stirnseiten des Zylinders der Kolben-Zylinder-Einrichtung durchgeführt sein. Dadurch kann eine bessere Führung der Kolbenstange gewährleistet und somit zusätzlich die Betriebssicherheit erhöht werden.

Zudem kann es sich als günstig erweisen, wenn die Zugfedern als Schraubenfedern ausgebildet sind, wobei der Durchmesser der Wicklung der innenliegenden Schraubenfeder kleiner als der Durchmesser der äußeren Schraubenfeder ist. Dadurch lassen sich die Herstellungskosten reduzieren.

Auch kann es sich als vorteilhaft erweisen, wenn die Zugfedern jeweils die gleiche Federkonstante aufweisen. Dadurch wird eine ungleichmäßige Beanspruchung der Federn vermieden.

Von Vorteil kann es auch sein, wenn die Zugfedern zwischen der Kolben-Zylinder-Einrichtung und der Schwinge angeordnet sind. Dann läßt sich die empfindlichere Kolben-Zylinder-Einrichtung näher ans Fahrzeug verlagern, so daß sie besser geschützt ist.

Auch kann es sich als vorteilhaft erweisen, wenn die Kolben-Zylinder-Einrichtung gelenkig am Fahrzeug und die Federn gelenkig mit der Schwinge angeordnet sind, und die Federn starr mit der Kolbeneinrichtung verbunden sind. Da auf diese Weise kein Gelenk zwischen den Federn und der Kolben-Zylinder-Einrichtung erforderlich ist, läßt sich auch dadurch die Konstruktion vereinfachen.

Ferner kann es sich als günstig erweisen, wenn die beiden Federn an ihren Enden jeweils mit einem gemeinsamen Federhalter verbunden sind. Derartige Federhalter sind bereits vorgefertigt erhältlich und ermöglichen ein besonders einfaches Verbinden der Federn mit der Kolben-Zylinder-Einrichtung oder der Schwinge.

Nachfolgend wir die Erfindung anhand eines Ausführungsbeispiels näher erläutert.

Es zeigen:
- Fig. 1: den Stromabnehmer in einer schematischen Darstellung;
- Fig. 2: die Kolben-Zylinder-Einrichtung mit den Schraubenfedern in einer vergrößerten Darstellung.

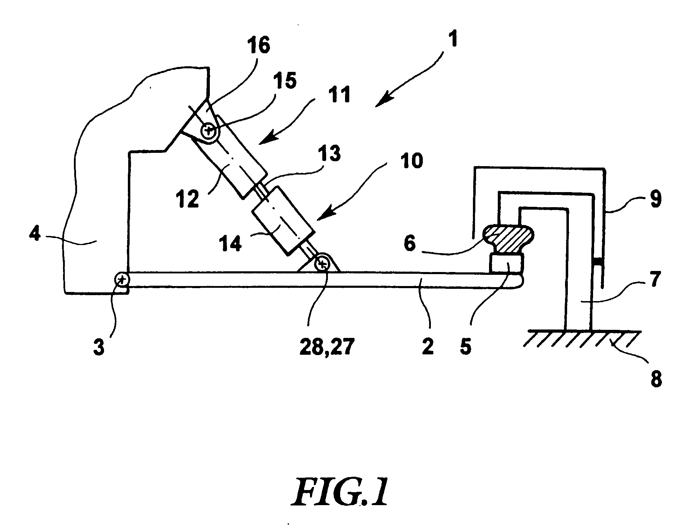

Fig. 1 zeigt den erfindungsgemäßen Stromabnehmer 1 in einer Seitenansicht. Der Stromabnehmer weist eine Schwinge 2 auf, die drehbar um ein Lager 3 an einem Fahrzeugkörper 4 eines Schienenfahrzeuges angebracht ist. Der Fahrzeugkörper 4 ist nur teilweise dargestellt. Die Schwinge 2 verfügt zudem über ein Kontaktelement 5, welches als Schleifstück ausgebildet ist. Das Kontaktelement 5 ist zum Abgriff von Strom an einer stromführenden Schiene 6 vorgesehen, die eine Stromleitung bildet. Die Schiene 6 ist im Querschnitt dargestellt und stützt sich über Stützelemente 7 am Erdboden 8 ab.

Die Stützelemente 7 sind in regelmäßigen Abständen vorgesehen. Die Schiene 6 bildet eine sogenannte dritte Schiene, von der Strom abgenommen werden kann. Die Schiene 6 ist von unten her zugänglich und ist von oben her über eine Abdeckung 9 vor ungewolltem Zugriff geschützt.

Der Stromabnehmer verfügt über eine Betätigungseinrichtung 10, mittels derer er von einer ersten Stellung, in der die Schwinge 2 gegenüber der Schiene 6 abgesenkt ist, so daß das Kontaktelement 5 mit der Schiene 6 außer Eingriff gelangt, in eine zweite Stellung überführbar ist, wie sie in Fig. 1 dargestellt ist. In dieser zweiten Stellung befindet sich das Kontaktelement 5 mit der Schiene 6 in Eingriff.

Die Betätigungseinrichtung 10 verfügt dazu über eine Kolben-Zylinder-Einrichtung 11. die einen Zylinder 12 und eine Kolbenstange 13 in bekannter Weise aufweist. Zudem verfügt die Betätigungseinrichtung über ein Federpaket 14.

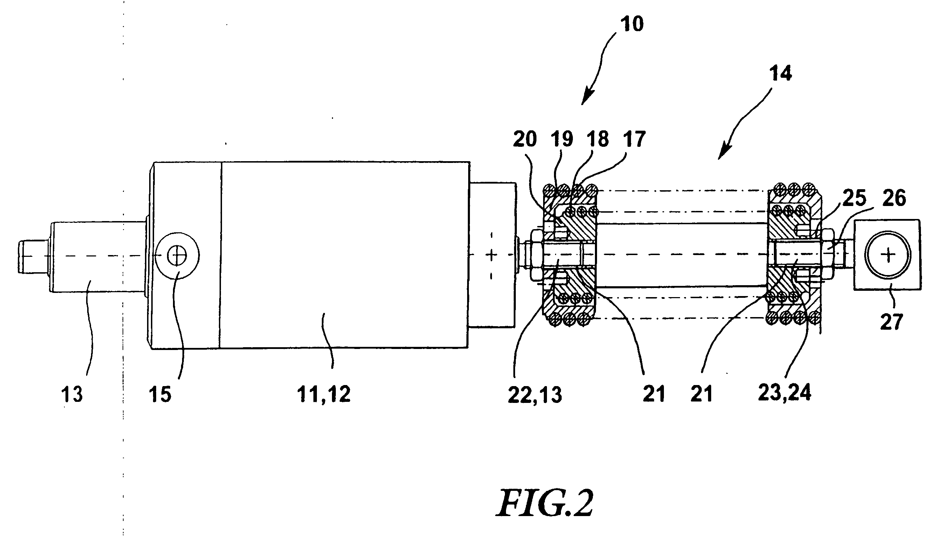

Die Betätigungseinrichtung 10 ist in Fig. 2 genauer dargestellt. Die Kolben-Zylinder-Einrichtung 11 weist eine Kolbenstange 13 auf, die sich vollständig durch den Zylinder 12 hindurch erstreckt. Der Zylinder 12 weist zudem eine Lagerstelle 15 auf, mit der er an einer Lagerstelle 16 des Fahrzeugkörpers 4 um eine Achse senkrecht zu seiner Längserstreckung schwenkbar gelagert ist.

In der Darstellung in Fig. 1 und Fig. 2 befindet sich die Kolben-Zylinder-Einrichtung 11 in einem zusammengefahrenen Zustand. In diesem Zustand der Kolben-Zylinder-Einrichtung 11 befindet sich die Schwinge 2 in ihrer zweiten Stellung. Zum Überführen der Schwinge 2 in ihre erste Stellung wird die Kolbenstange 13 ausgefahren bzw. in der Darstellung in Fig. 2 nach rechts Verfahren.

Das Federpaket 14 besteht aus zwei ineinandergesetzten Zugfedern 17 und 18 deren Symmetrieachsen jeweils miteinander fluchten, wobei die Symmetrieachsen zusätzlich auch mit der Symmetrieachse der Kolbenstange 13 fluchten. Die beiden Zugfedern 17 und 18 verfügen über die gleiche Federkonstante. Die äußere Zugfeder 17 weist einen größeren Durchmesser als die innere Zugfeder 18 auf. Die Federkonstanten lassen sich aufgrund der Materialauswahl und der Windungen realisieren.

Jede der beiden Zugfedern 17 und 18 ist jeweils in Federhaltern 19 und 20 aufgenommen. Diese Federhalter sind im wesentlichen becherförmig mit einer spiralförmigen Ausnehmung an ihrer Außenseite, in denen jeweils die Wicklungen der Zugfedern aufgenommen sind. Die inneren Federhalter verfügen jeweils über ein Innengewinde 21, in welches sich zylinderseitig ein Außengewinde 22 der Kolbenstange 13 und schwingenseitig ein Außengewinde 23 eines Gewindezapfens 24 hineinerstreckt. Die Federhalter 19 der äußeren Federn verfügen jeweils über Durchgangsbohrungen 25, durch die sich die Außengewinde 22 und 23 hindurcherstrecken, wobei der Innendurchmesser der Durchgangsbohrungen 25 geringfügig größer als der Außendurchmesser der Außengewinde 22 und 23 ist. Zusätzlich sind noch Kontermuttern 26 auf den beiden Außengewinden 22 und 23 vorgesehen, um die Federhalter der äußeren Zugfedern gegenüber den Federhaltern der inneren Zugfedern festzulegen.

Der Gewindezapfen 24 verfügt darüber hinaus über eine Lagerstelle 27, mit der er schwenkbar an einer Lagerstelle 28 der Schwinge befestigbar ist.

Bei dem Bauteil 4 kann es sich auch um eine Halteeinrichtung handeln, die an dem Fahrzeug befestigbar ist. Dazu kann die Halteeinrichtung über einen nicht dargestellten Flansch verfügen, der an einem Gegenflansch des Fahrzeuges z. B. durch Schrauben in bekannter Weise anbringbar ist. Dies hat den Vorteil, daß der gesammte Stromabnehmer mit Schwinge 2 und Kolben-Zylinder-Einrichtung 11 und Federpaket 14 als Einheit am Fahrzeug anbringbar ist. Dadurch kann der Stromabnehmer vormontiert werden und als Anbauteil am Fahrzeug angebracht werden. Dann ist die Schwinge 2 zwar nicht direkt am Fahrzeug 4 gelagert, sondern indirekt über die Halteeinrichtung.

### Nachfolgend wird die Wirkung und Funktionsweise der Erfindung näher erläutert:

In der in Fig. 1 dargestellten Stellung der Schwinge 2 befindet sich das Kontaktelement 5 in Anlage an der Schiene 6. Die Schiene 6 ist stromführend und die Stromabnahme erfolgt über das Kontaktelement 5. Die Leitungen und dergleichen zum Zuführen des Stromes zum Fahrzeug sind nicht dargestellt. Die Schiene in der Darstellung in Fig. 1 erstreckt sich senkrecht zur Bildebene. Die Fahrbewegung des Schienenfahrzeuges erfolgt parallel dazu.

Wenn kein Strom abgenommen werden soll, wird die Schwinge 2 in der Darstellung in Fig. 1 im Uhrzeigersinn verschwenkt, so daß das Kontaktelement 5 abgesenkt wird und mit der Schiene 6 außer Eingriff gerät.

Zum Überführen der Schwinge 2 von ihrer ersten Stellung in ihre zweite Stellung wird die pneumatisch oder hydraulisch betätigbare Kolben-Zylinder-Einrichtung von einer ausgefahrenen Stellung in der Darstellung in Fig. 2 nach links bewegt. Dadurch wird die Schwinge 2 angehoben. Während des Anhebens gelangt das Kontaktelement 5 mit der Schiene 6 in Kontakt. Die Kolben-Zylinder-Einrichtung weist jedoch noch einen gewissen Hub auf, bis die Kolben-Zylinder-Einrichtung an ihren Anschlag gerät. Bei dieser Weiterbewegung des Kolbens werden die beiden Zugfedern 17 und 18 unter Spannung gesetzt. Wenn sich die Kolbenstange 13 in ihrem Endanschlag befindet, also in der in Fig. 2 dargestellten Position, sind die beiden Zugfedern unter Spannung gesetzt, so daß das Kontaktelement 5 elastisch gegen die Schiene 6 vorgespannt ist. Dadurch ist es möglich, Unebenheiten im Verlauf der Schiene 6 während der Fahrt des Fahrzeuges in bekannter Weise auszugleichen.

Durch die neuartige Gestaltung des Stromabnehmers läßt sich die Betätigungseinrichtung 10 besonders einfach und kompakt gestalten. Aufgrund der wenigen erforderlichen Bauteile lassen sich die Herstellungskosten herabsetzen. Dadurch, daß sowohl die mit Symmetrieachsen der beiden Zugfedern als auch die Symmetrieachse der Kolbenstange miteinander fluchten, wird ein Verklemmen der Kolben-Zylinder-Einrichtung wirkungsvoll verhindert. Die Betriebssicherheit des Stromabnehmers wird dadurch erhöht.

## Patentansprüche

1. Stromabnehmer für Fahrzeuge, vorzugsweise Schienenfahrzeuge, mit einer Schwinge (2), die zumindest indirekt beweglich an dem Fahrzeug gelagert ist und ein Kontaktelement (5) zum Stromabgriff an einer Stromleitung (6) aufweist, wobei die Schwinge von einer ersten Stellung, in welcher das Kontaktelement von der Stromleitung beabstandet ist, in eine zweite Stellung überführbar ist, in der das Kontaktelement an der Stromleitung anliegt, einer Kolben-Zylinder-Einrichtung (11) zum Überfuhren der Schwinge (2) von ihrer ersten in ihre zweite Stellung, und zwei Zugfedern (17, 18) die mit der Kolben-Zylinder-Einrichtung (11) wirkverbunden sind und in der zweiten Stellung der Schwinge (2) das Kontaktelement nachgiebig gegen die Stromleitung vorspannen, **dadurch gekennzeichnet, daß** sich in der zweiten Stellung der Schwinge (2) die Kolben-Zylinder-Einrichtung (11) in einem zusammengefahrenen Zustand befindet und daß die beiden Zugfedern (17, 18) konzentrisch zueinander angeordnet sind, wobei die Symmetrieachsen der Zugfedern mit einer Symmetrieachse einer Kolbenstange (13) der Kolben-Zylinder-Einrichtung (11) fluchten.

2. Stromabnehmer nach Anspruch 1, **dadurch gekennzeichnet, daß** die Kolbenstange (13) durch die beiden einander gegenüberliegenden Stirnseiten des Zylinders (12) der Kolben-Zylinder-Einrichtung (11) durchgeführt ist.

3. Stromabnehmer nach Anspruch 1 oder 2, **dadurch gekennzeichnet, daß** die Zugfedern (17, 18) als Schraubenfedern ausgebildet sind, wobei der Durchmesser der Wicklung der innenliegenden Schraubenfeder kleiner als der Durchmesser der äußeren Schraubenfeder ist.

4. Stromabnehmer nach einem der vorangegangenen Ansprüche, **dadurch gekennzeichnet, daß** die Zugfedern (17, 18) jeweils gleiche Federkonstanten aufweisen.

5. Stromabnehmer nach einem der vorangegangenen Ansprüche, **dadurch gekennzeichnet, daß** die Zugfedern (17, 18) zwischen der Kolben-Zylinder-Einrichtung (11) und der Schwinge (2) angeordnet sind.

6. Stromabnehmer nach einem der vorangegangenen Ansprüche, **dadurch gekennzeichnet, daß** die Kolben-Zylinder-Einrichtung (11) gelenkig am Fahrzeug und die Federn (17, 18) gelenkig an der Schwinge angeordnet und die Federn (17, 18) starr mit der Kolben-Zylinder-Einrichtung (11) verbunden sind.

7. Stromabnehmer nach einem der vorangegangenen Ansprüche, **dadurch gekennzeichnet, daß** die beiden Federn (17, 18) an ihren Enden jeweils mit einem gemeinsamen Federhalter (19, 20) verbunden sind.

## Claims

1. Current collector for vehicles, preferably rail vehicles, having a rocker (2) which is mounted at least indirectly movably on the vehicle and has a contact element (5) for tapping current from a power supply line (6), the rocker being movable from a first position, in which the contact element is spaced from the power supply line, to a second position, in which the contact element rests against the power supply line, having a piston/cylinder device (11) for moving the rocker (2) from its first to its second position, and having two tension springs (17, 18) which are operatively connected to the piston/cylinder device (11) and, in the second position of the rocker (2), prestress the contact element yieldingly against the power supply line, **characterised in that**, in the second position of the rocker (2), the piston/cylinder device (11) is in a retracted state and **in that** the two tension springs (17, 18) are arranged concentrically with one another, the axes of symmetry of the tension springs being aligned with an axis of symmetry of a piston rod (13) of the piston/cylinder device (11).

2. Current collector according to Claim 1, **characterised in that** the piston rod (13) is guided through the two mutually opposite end sides of the cylinder (12) of the piston/cylinder device (11).

3. Current collector according to Claim 1 or 2, **characterised in that** the tension springs (17, 18) are designed as helical springs, the diameter of the winding of the inner helical spring being less than the diameter of the outer helical spring.

4. Current collector according to one of the preceding claims, **characterised in that** the tension springs (17, 18) each have identical spring constants.

5. Current collector according to one of the preceding claims, **characterised in that** the tension springs (17, 18) are arranged between the piston/cylinder device (11) and the rocker (2).

6. Current collector according to one of the preceding claims, **characterised in that** the piston/cylinder device (11) is arranged articulatedly on the vehicle and the springs (17, 18) are arranged articulatedly on the rocker, and the springs (17, 18) are connected rigidly to the piston/cylinder device (11).

7. Current collector according to one of the preceding claims, **characterised in that** the two springs (17, 18) are each connected at their ends to a common spring holder (19, 20).

## Revendications

1. Dispositif de prise de courant pour véhicule, de préférence pour véhicule sur rail, comportant une bielle oscillante (2), qui est logée au niveau du véhicule de façon au moins indirectement mobile et présente un élément de contact (5) destiné à la prise de courant au niveau d'une conduction de courant (6), dans lequel la bielle oscillante peut être transférée d'une première position, dans laquelle l'élément de contact de la conduction de courant est écarté, vers une seconde position dans laquelle l'élément de contact repose contre la conduction de courant, comportant un dispositif à piston-cylindre (11) permettant de transférer la bielle oscillante (2) de sa première position dans sa seconde position, et deux ressorts de traction (17, 18) qui sont reliés par action avec le dispositif à piston-cylindre (11) et, dans la seconde position de la bielle oscillante (2), pré-contraignent de façon flexible l'élément de contact contre la conduction de courant, **caractérisé en ce que** dans la seconde position de la bielle oscillante (2), le dispositif à piston-cylindre (11) se trouve dans un état resserré et **en ce que** les deux ressorts de traction (17, 18) sont disposés de façon concentrique l'un par rapport à l'autre, les axes de symétrie des ressorts de traction s'alignant avec un axe de symétrie d'une tige de piston (13) du dispositif à piston-cylindre (11).

2. Dispositif de prise de courant selon la revendication 1, **caractérisé en ce que** la tige de piston (13) est guidée par les deux faces frontales opposées l'une à l'autre du cylindre (12) du dispositif à piston-cylindre (11).

3. Dispositif de prise de courant selon la revendication 1 ou 2, **caractérisé en ce que** les ressorts de traction (17, 18) sont exécutés comme des ressorts cylindriques, le diamètre de l'enroulement du ressort cylindrique interne étant inférieur au diamètre du ressort cylindrique externe.

4. Dispositif de prise de courant selon l'une des revendications précédentes, **caractérisé en ce que** les ressorts de traction (17, 18) présentent respectivement les mêmes constantes de rappel.

5. Dispositif de prise de courant selon l'une des revendications précédentes, **caractérisé en ce que** les ressorts de traction (17, 18) sont disposés entre le dispositif à piston-cylindre (11) et la bielle oscillante (2).

6. Dispositif de prise de courant selon l'une des revendications précédentes, **caractérisé en ce que** le dispositif à piston-cylindre (11) est disposé par articulation au niveau du véhicule et les ressorts (17, 18) sont disposés par articulation au niveau de la bielle oscillante, et **en ce que** les ressorts (17, 18) sont reliés de façon fixe au dispositif à piston-cylindre (11).

7. Dispositif de prise de courant selon l'une des revendications précédentes, **caractérisé en ce que** les deux ressorts (17, 18) sont reliés à leurs extrémités respectivement à un support de ressort (19, 20) commun.
